# EUROPÄISCHE PATENTANMELDUNG

(11) **EP 1 568 899 A1**
(43) Veröffentlichungstag der Anmeldung: **31.08.2005**
(21) Anmeldenummer: 04029408.4
(22) Anmeldetag: 11.12.2004
(51) Int. Cl.: F16B 13/06, F16B 35/04

(54) **Spreizdübel mit Bolzen**

(30) Priorität: 27.02.2004 DE 202004003060 U
(71) Anmelder: Häfele GmbH & Co. KG, 72202 Nagold (DE)
(72) Erfinder: Walz, Rüdiger, 72401 Haigerloch (DE)
(74) Vertreter: Kohler Schmid Möbus

(57) **Zusammenfassung**

Um einen Spreizdübel mit Bolzen, wobei wenigstens zwei mit einer oder mehreren Faltlinien 6 versehene Faltstege 4,5 an einem Oberteil 2 und einem für das Einschrauben einer Schraube od. dgl. gelochten Bodenteil 3 des Dübels 1 schwenkbar angelenkt sind und der Bolzen 11 mindestens an seinem unteren in die Lochung 7 des Bodenteils 3 eingreifenden Ende mit Gewinde 12 versehen ist, so zu gestalten, dass beim Ausschrauben des Bolzens 11 die Faltstege 4,5 wieder in ihre ursprüngliche ungefaltete Lage zurückgehen und der Dübel 1 ohne weiteres aus der Platte herausgenommen werden kann, weist der Bolzen 11 etwa an seinem oberen Ende zwei im Abstand 19 voneinander angeordnete, das Oberteil 2 des Dübels 1 zwischen sich aufnehmende in Längsrichtung wirkende Anschläge, insbesondere Ringflansche 13,14, auf.

## Beschreibung

Es sind bereits Spreizdübel mit Bolzen bekannt, wobei das ringförmige Oberteil und das für das Einschrauben einer Schraube gelochte Bodenteil des Dübels durch mit jeweils einer Falzlinie versehene Faltstege gelenkig verbunden sind. Dabei greift der Bolzen, welcher an seinem unteren Ende mit Gewinde versehen ist, in eine Lochung des Bodenteils ein. Beim Einschrauben des Bolzen in das Bodenteil wird dieses in Richtung zum Oberteil angezogen, wobei dann die Faltstege in eine Faltstellung bis zur Anlage an die Unterfläche einer Platte oder dergleichen geschwenkt werden. Auf diese Weise wird die Platte zwischen dem Oberteil und den Faltstegen eingeklemmt, so dass sich ein fester Halt für den Dübel und damit den Bolzen ergibt. Bei den bekannten Ausführungsformen dieser Art ergibt sich jedoch der Nachteil, dass der Dübel nur sehr schwer oder aber in zerstörtem Zustand aus der Platte wieder herausgenommen werden kann. Beim Herausschrauben des Bolzens verbleiben nämlich die Faltstege in ihrer Lage und lediglich der Bolzen kann nach oben entnommen werden.

Die Aufgabe der vorliegenden Erfindung ist es daher, einen Spreizdübel mit Bolzen der eingangs beschriebenen Art so zu gestalten, dass beim Ausschrauben des Bolzens die Faltstege wieder in ihre ursprüngliche ungefaltete Lage zurückgehen und der Dübel ohne weiteres aus der Platte herausgenommen werden kann.

Dies wird erfindungsgemäß dadurch erreicht, dass der Bolzen etwa an seinem oberen Ende zwei im Abstand voneinander angeordnete, das Oberteil des Dübels zwischen sich aufnehmende in Längsrichtung wirkende Anschläge, insbesondere Ringflansche, aufweist. Beim Einschrauben eines solchen Bolzens stützt sich zunächst der obere Anschlag am Oberteil des Dübels ab, so dass das Unterteil in Richtung zum Oberteil angezogen wird, wobei sich die Faltstege in ihre Faltlage bewegen. Beim Herausschrauben dagegen schlägt nunmehr der untere Anschlag des Bolzens am Oberteil des Dübels an, so dass der Bolzen nicht mehr nach oben ausweichen kann und infolgedessen das Unterteil und die Faltstege wiederum in ihre Ausgangslage gedrückt werden.

Wenn der Bolzen einen selbstschneidendes Gewinde aufweist, reicht eine einfache Bohrung im Loch des Bodenteils aus. Im andern Fall ist es jedoch zweckmäßig, das Loch des Bodenteils mit Innengewinde zu versehen.

Der Dübel kann mit eingesetztem Bolzen hergestellt und geliefert werden, jedoch ist es zweckmäßig, die Teile gesondert herzustellen. Dann aber ist es nach einem weiteren Merkmal der Erfindung erforderlich, dass der Dübel an einer von Faltstegen freien Seite einen Einschnitt zum seitlichen Einsetzen des Bolzens aufweist. Dieser Einschnitt sollte jedoch zweckmäßig oberhalb des Bodenteils enden um zu verhindern, dass die sonst nur noch dünne Wand des Bodenteils durch das Gewinde des Bolzens beim Eindrehen durchbrochen wird. Vorzugsweise entspricht der Abstand zwischen den beiden Anschlägen mindestens der Länge des gelochten Bodenteils, da andernfalls ein seitliches Einsetzen durch die beiden Anschläge nicht möglich ist.

Die Zeichnung zeigt ein Ausführungsbeispiel der Erfindung. Es stellen dar:
- Figur 1: die Ansicht eines Spreizdübels in ungefaltetem Zustand,
- Figur 2: die Ansicht eines Bolzens,
- Figur 3: einen Spreizdübel mit eingesetztem Bolzen in ungefaltetem Zustand,
- Figur 4: einen Spreizdübel mit eingesetztem Bolzen in gefaltetem Zustand,
- Figur 5: eine Darstellung nach Figur 4 mit einem in eine Hohlplatte eingesetzten Spreizdübel,
- Figur 6: eine Darstellung nach Figur 3 mit einem Bolzen in der oberen Anschlagstellung.

Der Dübel 1 besteht aus einem Oberteil 2 und einem Unterteil 3. Diese beiden Teile sind durch zwei Faltstege 4 und 5 gelenkig miteinander verbunden, wobei jeder Faltsteg 4, 5 eine Faltlinie 6 aufweist. Das Unterteil 3 ist mit einer Gewindebohrung 7 und das Oberteil mit einem nach oben herausragenden Kragen 8 versehen. Zwischen den beiden Faltstegen 4 und 5 ist ein Einschnitt 9 vorgesehen, welcher bis zum oberen Rand 10 des Unterteils 3 reicht.

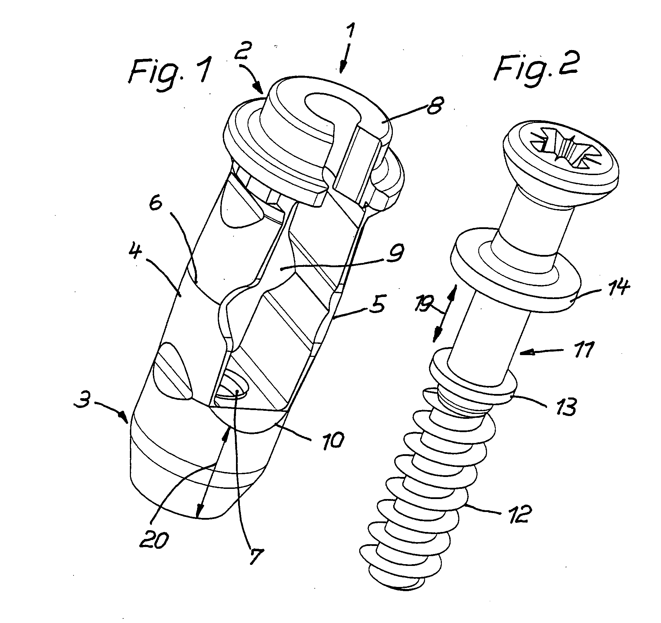

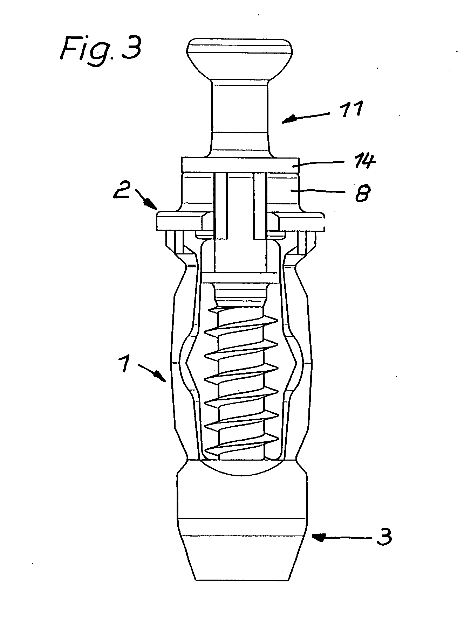

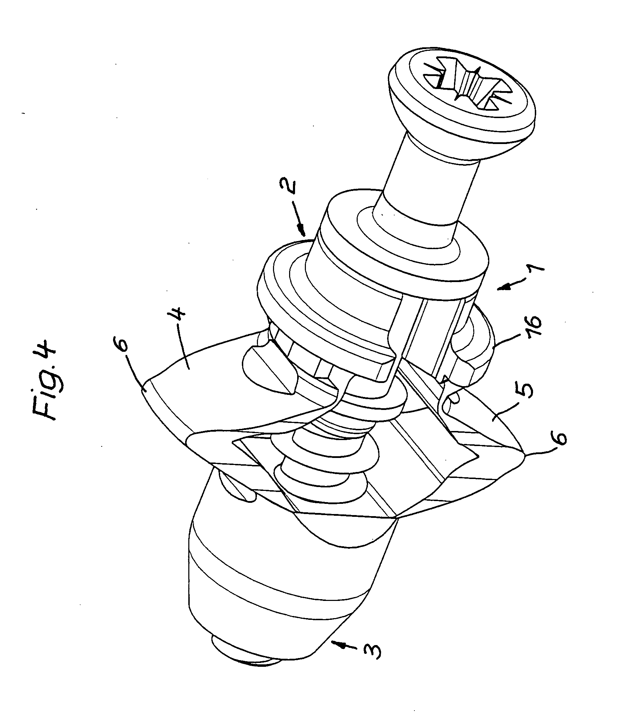

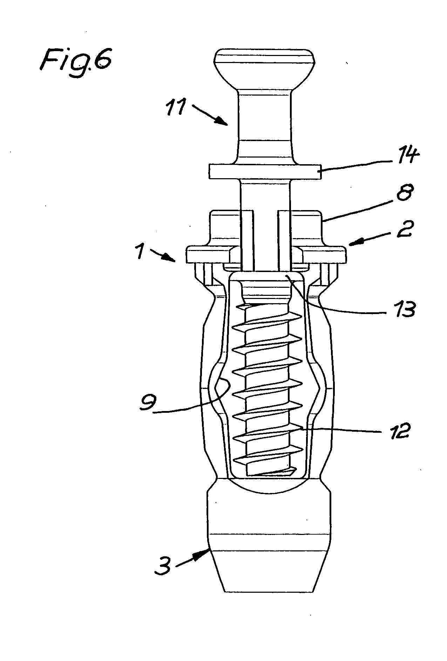

Der in Figur 2 dargestellte Bolzen 11 ist in seinem unteren Teil mit Gewinde 12 versehen und weist am oberen Ende zwei Ringflansche 13 und 14 auf. Der Bolzen 11 wird seitlich in den Einschnitt 9 des Dübels 1 eingesetzt und zwar so, dass der obere Ringflansch 14 oberhalb des Kragens 8 und der untere Ringflansch 13 unmittelbar unter das Oberteil 2 zu liegen kommt, wie dies Figur 6 zeigt. Anschließend wird dann gemäß Figur 3 der Bolzen 11 in die Gewindebohrung 7 des Unterteils 3 eingeschraubt, bis der obere Ringflansch 14 am Kragen 8 des Dübels 1 anliegt. Beim weiteren Eindrehen stützt sich dann der Bolzen 11 mit dem Ringflansch 14 auf dem Dübel 1 ab, so dass das Unterteil 3 des Dübels 1 gemäß Figur 4 nach oben gezogen wird. Dabei knicken die Faltstege 4 und 5 an den Faltlinien 6 ein, so dass sich nur noch ein schmaler Spalt zwischen dem am Oberteil 2 des Dübels 1 vorgesehenen Ringflansch 16 und den Faltstegen 4, 5 ergibt.

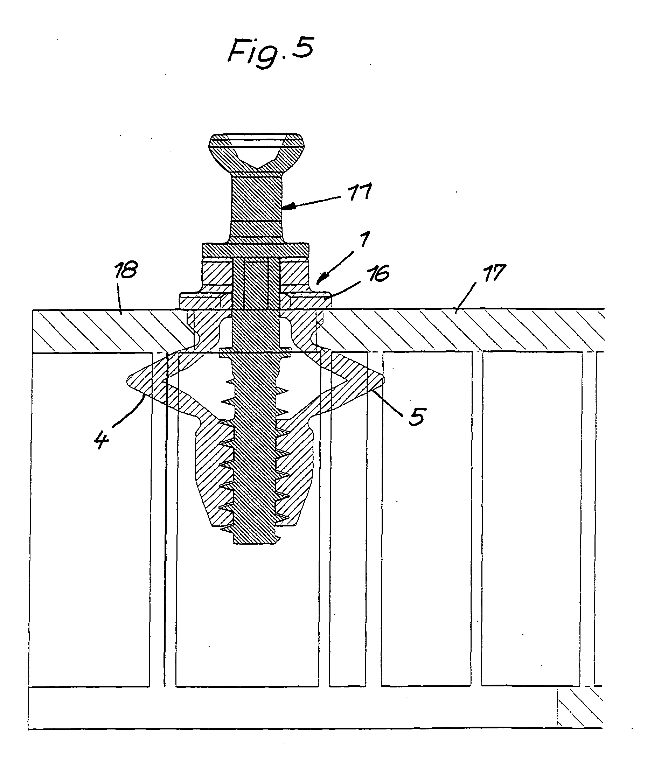

Figur 5 zeigt die Befestigung des Dübels 1 in einer Hohlplatte 17, wobei deutlich erkennbar ist, dass die Deckplatte 18 der Hohlplatte 17 zwischen dem Flansch 16 und den Faltstegen 4, 5 eingeklemmt ist, so dass sich ein fester Halt für den Dübel 1 und damit den Bolzen 11 ergibt.

Um den Dübel 1 wieder aus der Hohlplatte 17 herausziehen zu können, wird der Bolzen 11 gegen den Uhrzeigersinn gedreht. Er bewegt sich dabei nach auswärts bis in die Stellung nach Figur 6, in welcher der obere Ringflansch 14 des Bolzens 11 an der Unterseite des Oberteils 1 anliegt. Beim Weiterdrehen wird dann das Unterteil 3 nach unten bewegt und ebenso wie die Faltstege 4 und 5 wiederum in die Ausgangsstellung nach Figur 6 gebracht. Anschließend kann der Dübel 1 am Bolzen 11 herausgezogen und dieser anschließend aus dem Einschnitt 9 wiederum entnommen werden.

Der Abstand 19 zwischen den beiden Ringflanschen 13,14 des Bolzens 11 entspricht, um ihn seitlich in den Einschnitt 9 des Dübels 1 einsetzen zu können, mindestens der Länge 20 des Bodenteils 3, da im Hinblick auf die Länge des Bolzens 11 andernfalls ein seitliches Einsetzen durch die beiden Ringflansche nicht möglich ist.

## Patentansprüche

1. Spreizdübel mit Bolzen, wobei wenigstens zwei mit einer oder mehreren Faltlinien (6) versehene Faltstege (4,5) an einem Oberteil (2) und einem für das Einschrauben einer Schraube od. dgl. gelochten Bodenteil (3) des Dübels (1) schwenkbar angelenkt sind und der Bolzen (11) mindestens an seinem unteren in die Lochung (7) des Bodenteils (3) eingreifenden Ende mit Gewinde (12) versehen ist, **dadurch gekennzeichnet, dass** der Bolzen (11) etwa an seinem oberen Ende zwei im Abstand (19) voneinander angeordnete, das Oberteil (2) des Dübels (1) zwischen sich aufnehmende in Längsrichtung wirkende Anschläge, insbesondere Ringflansche (13,14), aufweist.

2. Spreizdübel nach Anspruch 1, **dadurch gekennzeichnet, dass** das Loch (7) des Bodenteils (3) mit Innengewinde für das Gewindeende (12) des Bolzens (11) versehen ist.

3. Spreizdübel nach einem oder beiden der Ansprüche 1 und 2, **dadurch gekennzeichnet, dass** der Dübel (1) an einer von Faltstegen (4,5) freien Seite einen Einschnitt (9) zum seitlichen Einsetzen des Bolzens (11) aufweist.

4. Spreizdübel nach einem oder mehreren der vorhergehenden Ansprüche, **dadurch gekennzeichnet, dass** der Einschnitt (9) oberhalb des Bodenteils (3) endet.

5. Spreizdübel nach einem oder mehreren der vorhergehenden Ansprüche, **dadurch gekennzeichnet, dass** der Abstand (19) zwischen den beiden Anschlägen (13,14) mindestens der Länge (20) des Bodenteils (3) entspricht.
